# EUROPEAN PATENT APPLICATION

(11) **EP 2 075 732 A2**
(43) Date of publication of application: **01.07.2009**
(21) Application number: 08169461.4
(22) Date of filing: 19.11.2008
(51) Int. Cl.: G06F 21/00

(54) **Media editing system using digital rights management metadata to limit import, editing and export operations performed on temporal media**

(30) Priority: 20.11.2007 US 986204
(71) Applicant: Avid Technology, Inc., Tewksbury, MA 01876 (US)
(72) Inventor: Kovalick, Albert, Santa Clara, CA 95051 (US)
(74) Representative: Cole, Douglas Lloyd

(57) **Abstract**

A computer system for editing temporal media, such as audio, video, audiovisual works and the like, limits the editing operations that can be performed on the temporal media according to the digital rights management metadata associated with the temporal media. The digital rights management metadata may be, for example, rules associated with the temporal media which describe how the temporal media can be imported into the editing system, manipulated by the editing system and/or exported by the editing system.

## Description

### BACKGROUND

Editing systems for creating video, audio, audiovisual and other rich media presentations generally provide a large set of operations which may be performed on media data. A full featured nonlinear editing system, for example, imports video, audio, graphics and textual content; allows clips to be defined, put in a sequence, reordered, trimmed and otherwise modified to create a composition; and exports the resulting composition. In such systems, there are few, if any, constraints on the sources of input, or the operations that may be performed on the media data, or the final destination and format of the resulting composition.

With the increased use of the internet as a distribution channel for media data, there also is an increased concern, on the part of owners of rights in the media data, about controlling how the media data is used. In particular, while some owners of branded media data may wish to allow consumers to remix, modify and redistribute their media data, these owners also do not want either their branded programming to be tarnished or to lose revenue. At least in part for this reason, premium content, such as movies, music, sporting events, concerts, cartoon animations, television programming are generally not distributed in a form that permits remixing, modification and redistribution.

### SUMMARY

Aspects of the invention are set out in the independent claims. Certain preferred features are set out in the dependent claims. As disclosed herein, a computer system for editing temporal media, such as audio, video, audiovisual works and the like, limits the editing operations that can be performed on the temporal media according to the digital rights management metadata associated with the temporal media. The digital rights management metadata may be, for example, rules associated with the temporal media which describe how the temporal media can be imported into the editing system, manipulated by the editing system and/or exported by the editing system.

### BRIEF DESCRIPTION OF THE DRAWINGS

Fig. 1 is a dataflow diagram of an example computer system for editing temporal media using digital rights management metadata.

Fig. 2 is a dataflow diagram of example processing modules for editing temporal media using digital rights management metadata.

Fig. 3 is a flowchart describing an example process for editing temporal media using digital rights management metadata.

### DETAILED DESCRIPTION

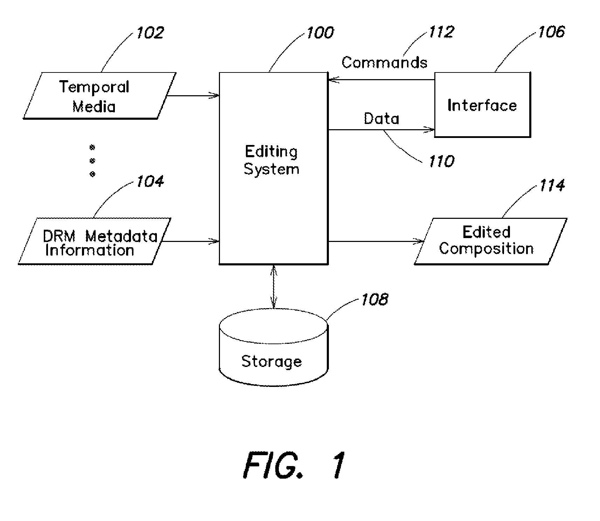

Referring now to Fig. 1, an example computer system for editing temporal media will now be described. The editing system 100 receives temporal media 102 and its associated digital rights management metadata 104. The editing system 100 may store the received temporal media 102 and its associated digital rights management metadata 104 in storage 108. Storage 108 may be local to or remote (e.g., available over a computer network or on the internet) from the editing system 100, and may be dedicated to the editing system or shared by other editing systems and/or other systems. Multiple editing systems may be present in a networked environment and share the stored temporal media and associated digital rights management metadata. An editing system may retrieve the stored temporal media 102 and its associated digital rights management metadata 104 from storage 108. The editing system is used by one or more individuals, or in some cases responsive to an automated process, to creatively edit the temporal media together into an edited composition 114.

Temporal media is media data that is sampled over time. Temporal media data thus generally can be described by its sampling rate, which represents a number of samples per period of time. Examples of temporal media are, but are not limited to, audio data, motion video data, audiovisual data, and computer generated animation.

Digital rights management metadata is information that indicates which rights have been granted by the owner of the temporal media to an editing user. These rights may be explicitly described by the digital rights management metadata or may be inferred from the data. In one implementation, the digital rights management metadata may include a parameter for each editing, import and distribution operation performed by the editing system, indicating whether that operation is enabled for the associated temporal media. The editing system interprets this metadata to determine what limits or constraints should be imposed on the editing, distribution and import operations that can be performed for the user.

The digital rights management metadata may be associated with the temporal media in a variety of ways. For example, the digital rights management metadata may be embedded in the temporal media, may be included in the same bitstream that includes the temporal media, or may be included in the same data file that stores the temporal media, or may be included in a separate bitstream that is otherwise related to the temporal media, or may be stored in a data file that is otherwise related to the temporal media.

The temporal media and associated digital rights management metadata may be received by the editing system in a number of ways. For example, this data may be received over a computer network, over a bus connected to a computer, from memory, or from a storage device. The temporal media or digital rights management metadata is read from a data file or bitstream in which it is located into a memory accessible by the editing system.

The editing system, through an interface 106, informs a user about the available temporal media and the available operations (through data 110), and permits the user to select from among the available operations and available temporal media (which are provided as commands 112 to the editing system 100). The user may be one or more individuals, in which case data 110 may be display data for a graphical user interface, or an automated process. As described in more detail below, the available operations and available temporal media may depend on one or more of a. the digital rights management metadata associated with the selected temporal media on which a selected operation will be performed, b. the digital rights management metadata associated with the temporal media otherwise within the composition being edited and c. the environment in which the computer system is operating.

A typical editing system enables a user to perform a variety of editing operations to create a composition using the temporal media. A composition of temporal media generally includes one or more concurrent sequences of segments of temporal media. A segment may include one or more clips of temporal media that are layered or otherwise combined together. Each clip generally refers to a portion of some temporal media, typically by referencing a start point and a stop point in time within the temporal media.

As an example of the variety of editing operations, given a clip of temporal media, a user may wish to modify the content of the clip. For example, these modifications may involve adding content or modifying content. For video, example operations that add content to a clip include image and textural overlay, compositing, rotoscoping, keying or paint operations. For video, example operations that modify content include warping, morphing, color correction, applying other effects, or pan and scan operations. For audio, example operations that modify content include a variety of effects.

Another example category of editing operations includes timeline operations which involve the position and duration of clips in a composition. In addition to placing a clip at a desired position in a timeline, temporal modifications to a clip may be made. For example, a clip may be cut, trimmed or split and clips can be reordered. In other words, the sequencing of clips, or their temporal order, may be modified or rearranged. A clip may be stretched temporally to provide for slower or faster playback of the clip.

There are a variety of ways to limit the editing operations according to the digital rights management metadata associated with the temporal media. In one implementation, all operations by the editing system may be limited to a specified content owner, i.e., a specified owner in the copyrights in temporal media. The digital rights management metadata associated with the temporal media, in this example, is any metadata that is indicative of the owner of the copyrights in the temporal media. In such a case, editing operations are enabled only for temporal media associated with the specified content owner. Other temporal media cannot be imported into or otherwise edited by the editing system.

In another implementation, each operation, or group of operations, may have a parameter indicating whether the operation is enabled, and any other restrictions on the operation if it is enabled. The digital rights management metadata for all of the available temporal media is evaluated, and the most restrictive set of limitations on the operations is derived and used.

In addition to limiting an editing operation by limiting the temporal media to which the editing operation may be applied, the editing operation also may be limited in the extent of its operation. For example, a minimum clip size could be set for the editing system. In such a case, all operations that affect clip size would include a parameter through which a minimum clip size may be set. These operations would in turn ensure that the result of these operations is a clip having at least the minimum clip size. As another example, the editing operation may be enabled only for a portion of a clip.

The editing system also allows a user to import temporal media into the computer system for editing. Typically, such import operations involve reading information from a file to extract metadata about the file, and optionally to convert the file to a format in which it can be processed by the editing system. These import operations also may be limited according to digital rights management metadata associated with the temporal media. In one implementation, the editing system itself may be limited to a specified content owner. In such a case, only content associated with the specified content owner may be imported into the editing system. In a second implementation, the editing system itself may be limited to a specified storage location for media import. In such a case, only content associated with the specified storage location may be imported into the editing system. This storage location may be on a computer network, such as the internet.

An editing system also usually permits a user to distribute an edited composition. Distribution may include any production or copy of the edited composition stored outside of the memory used by the editing system. For example, it may be exported to a data file, to a web site, to a DVD, etc., from which another application may access it, read it, copy it or further modify it. The distribution of the edited composition also may be limited according to the digital rights management metadata associated with the temporal media in the edited composition. In one implementation, the editing system itself may be limited to a specified content owner. In such a case, an edited composition may be distributed only to a location designated by the specified content owner.

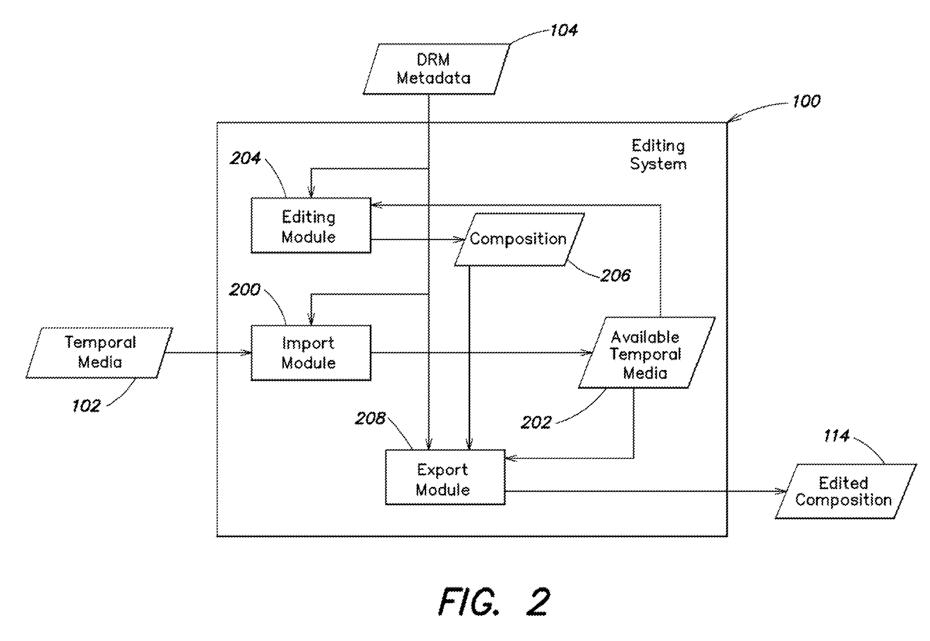

Referring now to Fig. 2, a data flow diagram of an example implementation of such an editing system will now be described. In particular, the editing system (such as editing system 100 in Fig. 1) has an import module 200 that receives temporal media 102 and makes the received temporal media available for editing by the editing system, as indicated at 202. An editing module 204 that performs editing functions has operations for creating a composition 206 using the available temporal media 202. An export module 208 provides operations for outputting an edited composition 114 according to the composition 206 using the available temporal media 202. The operations of each of the import module, editing module and export module may be limited according to digital rights management metadata associated with the temporal media in the composition.

An editing system that is limited in this manner may be useful in a number of different contexts and may have a variety of uses.

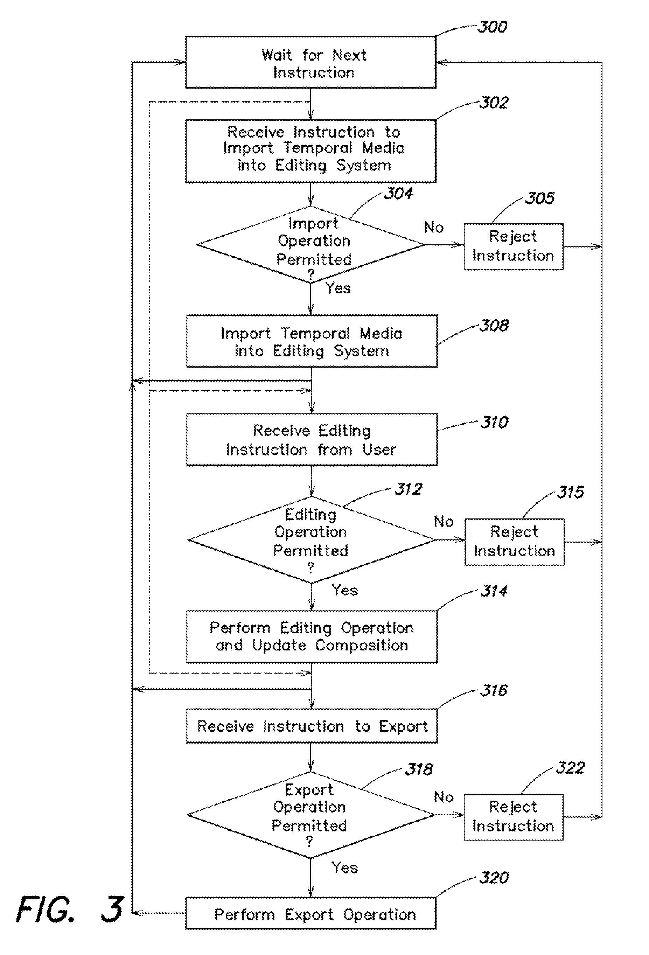

A general overview of its use will now be described in connection with the flowchart of Fig. 3. The editing system receives (302) an instruction to import temporal media into the editing system. The digital rights management metadata is evaluated (304) to determine whether this import operation is permitted. If the import operation is permitted, it is performed (308) by the editing system; otherwise the instruction is rejected (305). The system then waits (300) for the next instruction.

The editing system, after it has available temporal media, may receive (310) an instruction to edit, or perform a selected editing operation on, the available temporal media. The digital rights management metadata is evaluated (312) to determine whether this editing operation is permitted. If the editing operation is permitted, it is performed (314) by the editing system; otherwise the instruction is rejected (315). The system then waits (300) for the next instruction.

The editing system, after it has an edited composition, may receive (316) an instruction to distribute or export the edited composition. The digital rights management metadata is evaluated (318) to determine whether this distribution operation is permitted. If the distribution operation is permitted, it is performed (320) by the editing system; otherwise the instruction is rejected (322). The system then waits (300) for the next instruction.

There are many instances in which this kind of editing would be useful. For example, a content owner may wish to distribute temporal media in a manner that enables an end user to provide only commentary. For example, movies, premiere events and news programming may be distributed over the internet. End users may be permitted to view selected portions of the content, without performing any timeline operations, and add commentary in the form composited text, graphical icons, or other overlay. The end users may be permitted to redistribute the temporal media, with commentary, to a location specified by the content owner.

As another example, a content owner may wish to distribute temporal media in a manner that enables an end user for limited remixing. For example, movies, premiere events and news programming may be distributed over the internet. End users may be permitted to view selected portions of the content and create a cuts-only composition using the owner provided video clips and audio segments. No other materials may be added from private or other sources. Various editing operations such as transitions and compositing may be disabled. This example could be extended to permit more user creativity by permitting a user, for example, to add transitions between clips, embed simple video composites, add sounds from private sources and distribute a limited number of copies. The digital rights management metadata may be dynamic and may be updated. For example, a user may purchase additional editing rights from a content owner after an initial purchase. Or, the editing rights may expire over time.

These examples also apply to music. For example, individual music tracks, possibly from a purchased music CD or Web source, or mix files, may be assembled to create a new composition by an end user. DRM restrictions may be enforced in terms of length of the overall composition, total number of sound tracks and distribution rights.

The various components of the system described herein may be implemented as a computer program using a general-purpose computer system. Such a computer system typically includes a main unit connected to both an output device that displays information to a user and an input device that receives input from a user. The main unit generally includes a processor connected to a memory system via an interconnection mechanism. The input device and output device also are connected to the processor and memory system via the interconnection mechanism.

One or more output devices may be connected to the computer system. Example output devices include, but are not limited to, a cathode ray tube (CRT) display, liquid crystal displays (LCD) and other video output devices, printers, communication devices such as a modem, and storage devices such as disk or tape. One or more input devices may be connected to the computer system. Example input devices include, but are not limited to, a keyboard, keypad, track ball, mouse, pen and tablet, communication device, and data input devices. The invention is not limited to the particular input or output devices used in combination with the computer system or to those described herein.

The computer system may be a general purpose computer system which is programmable using a computer programming language, a scripting language or even assembly language. The computer system may also be specially programmed, special purpose hardware. In a general-purpose computer system, the processor is typically a commercially available processor. The general-purpose computer also typically has an operating system, which controls the execution of other computer programs and provides scheduling, debugging, input/output control, accounting, compilation, storage assignment, data management and memory management, and communication control and related services.

A memory system typically includes a computer readable medium. The medium may be volatile or nonvolatile, writeable or nonwriteable, and/or rewriteable or not rewriteable. A memory system stores data typically in binary form. Such data may define an application program to be executed by the microprocessor, or information stored on the disk to be processed by the application program. The invention is not limited to a particular memory system.

A system such as described herein may be implemented in software or hardware or firmware, or a combination of the three. The various elements of the system, either individually or in combination may be implemented as one or more computer program products in which computer program instructions are stored on a computer readable medium for execution by a computer. Various steps of a process may be performed by a computer executing such computer program instructions. The computer system may be a multiprocessor computer system or may include multiple computers connected over a computer network. The components shown in Fig. 1 may be separate modules of a computer program, or may be separate computer programs, which may be operable on separate computers. The data produced by these components may be stored in a memory system or transmitted between computer systems.

Having now described an example embodiment, it should be apparent to those skilled in the art that the foregoing is merely illustrative and not limiting, having been presented by way of example only. Numerous modifications and other embodiments are within the scope of one of ordinary skill in the art and are contemplated as falling within the scope of the invention.

## Claims

1. A computer program product for editing temporal media, comprising:
a computer-readable medium with computer program instructions encoded thereon, wherein the computer program instructions, when processed by a computer, instruct the computer to perform a method for facilitating editing of temporal media, comprising:
receiving digital rights management metadata associated with the temporal media; and
enabling a user to perform editing operations on a composition that includes the temporal media, while limiting the editing operations according to the digital rights management metadata associated with the temporal media.

2. The computer program product of claim 1, wherein the method further comprises enabling a user to distribute the edited composition, while limiting distribution of the edited composition according to the digital rights management metadata associated with the temporal media in the edited composition.

3. The computer program product of claim 2, wherein the method further comprises enabling a user to import temporal media into the computer system for editing, while limiting importation of the temporal media according to the digital rights management metadata associated with the temporal media.

4. The computer program product of claim 1, wherein the method further comprises enabling a user to import temporal media into the computer system for editing, while limiting importation of the temporal media according to the digital rights management metadata associated with the temporal media.

5. The computer program product of claim 1, wherein the digital rights management metadata is embedded in the temporal media.

6. The computer program product of claim 1, wherein the digital rights management metadata is included in a bitstream that also includes the temporal media.

7. The computer program product of claim 1, wherein the digital rights management metadata is included in a data file that stores the temporal media.

8. The computer program product of claim 1, wherein the digital rights management metadata is included in a bitstream that does not include the temporal media, and the bitstream is related to the temporal media.

9. The computer program product of claim 1, wherein the digital rights management metadata is included in a data file that does not include the temporal media, and the data file is related to the temporal media.

10. An editing system, comprising:
an import module including operations for receiving temporal media and making the received temporal media available for editing by the editing system;
an editing module including operations for creating compositions using the temporal media available for editing by the editing system;
an export module including operations for outputting compositions edited by the editing system;
wherein available operations of the import module, editing module and export module are limited according to digital rights management metadata associated with the temporal media in the composition.

11. A method of editing temporal media, the method comprising:
receiving digital rights management metadata associated with the temporal media; and
enabling a user to perform editing operations on a composition that includes the temporal media, while limiting the editing operations according to the digital rights management metadata associated with the temporal media.

12. The method of claim 11, wherein the method further comprises enabling a user to distribute the edited composition, while limiting distribution of the edited composition according to the digital rights management metadata associated with the temporal media in the edited composition.

13. The method of claim 11, wherein the method further comprises enabling a user to import temporal media into the computer system for editing, while limiting importation of the temporal media according to the digital rights management metadata associated with the temporal media.

14. The method of claim 11, wherein the digital rights management metadata is embedded in the temporal media.

15. The method of claim 11, wherein the digital rights management metadata is included in a bitstream that also includes the temporal media.
